# EUROPEAN PATENT APPLICATION

(11) **EP 3 203 779 A1**
(43) Date of publication of application: **09.08.2017**
(21) Application number: 14904785.4
(22) Date of filing: 29.10.2014
(51) Int. Cl.: H04W 36/30

(54) **USER EQUIPMENT AND CELL SWITCHING METHOD**

(71) Applicant: Huawei Technologies Co. Ltd., Shenzhen, Guangdong 518129 (CN)
(72) Inventor: SHENG, Jie, Shenzhen Guangdong 518129 (CN); WANG, Jun, Shenzhen Guangdong 518129 (CN); HU, Liang, Shenzhen Guangdong 518129 (CN)
(74) Representative: Pfenning, Meinig & Partner mbB
(86) International application number: PCT/CN2014/089753
(87) International publication number: WO 2016/065543

(57) **Abstract**

User equipment and a cell handover method are provided. The method includes: sending measured signal quality information and channel rank feedback information that are of a source cell and of a neighboring cell to the source cell, where the signal quality information and the channel rank feedback information are used for determining, in the source cell, to send a handover message to the user equipment; after the handover message is received, connecting to the target cell by using at least one second antenna; and disconnecting from the source cell, and disabling at least one first antenna. Corresponding user equipment is further disclosed. In a cell handover process, the multiple-antenna user equipment in embodiments of the present invention uses an antenna to connect to a target cell, and another antenna remains connected to a source cell, so that a low-delay smooth handover between cells can be implemented, and a conventional cell handover technology is no longer limited in different handover application scenarios.

## Description

### TECHNICAL FIELD

The present invention relates to the field of communications technologies, and in particular, to user equipment and a cell handover method.

### BACKGROUND

With continuous development of a multiple-antenna theory, a multiple-input multiple-output (Multiple Input Multiple Output, MIMO) radio communications technology also becomes increasingly mature. In a MIMO system, a multiple-antenna unit is used on both a base station (Base Station, BS) side and a user equipment (User Equipment, UE) side. By using multipath propagation of a radio channel, spatial resources are utilized, and parallel space transmission paths are established. Quality and a data rate of the radio communications are exponentially increased without increasing bandwidth or transmit power. More antennas of the BS/UE indicate a better performance in link reliability and the data rate.

When a user using a radio network service moves from a cell to another cell, or because of load adjustment of a radio transmission service, a device fault, or the like, an originally serving cell cannot continue to serve the user. To ensure service continuity and quality, a system searches for a most appropriate cell or network to continue to serve the user equipment, and transfers a communications link between the user equipment and the original cell to a new cell to implement mobility management of radio network seamless coverage. This process is a cell handover. The handover is an important part in mobility management of a radio cellular communications system, and a handover success rate and a handover delay are important indicators for a mobility management performance of the radio communications system.

According to a quantity of communications links in a handover process, a conventional cell handover manner may be generally classified into two types: a hard handover and a soft handover. The hard handover is a handover between base stations or coverage cells of different frequencies. In this handover process, when user equipment moves from a source cell to a target cell, the user equipment transmits handover signaling by using a source-cell link. After preparation work in the source cell and the target cell is complete, the user equipment is disconnected from the source cell, is tuned to a frequency of the target cell, establishes a new link, and begins to perform uplink/downlink data communication with the target cell after the handover is complete. The soft handover is a handover mode between different cells of a same frequency. In a soft handover process, because the handover is performed between intra-frequency cells, the user equipment in a handover state may keep in contact with multiple cells at the same time. After a new link between the user equipment and the target cell is established, a link between the user equipment and the source cell is disabled, so that handing over the user equipment from the source cell to the target cell is complete, and uplink/downlink data communication with the target cell begins on the new link. In the two handover manners, the user equipment uses all antennas in communication with the source cell or the target cell at the same time, and after the handover is complete, a quantity of working antennas in the user equipment does not change.

The hard handover is a "release-establish" process, and therefore, there is an interruption period in the handover process. The user equipment connects to only one cell at any time. Because the hard handover process occurs between two cells, the two cells are in a competition relationship. If signal strength of the two cells changes acutely in a particular area, the user equipment is frequently handed over between the two cells. On one hand, this brings inconvenience to the system. On the other hand, a call drop rate also increases. Further, during the hard handover, the user equipment is first disconnected from the source cell, and then establishes a link to the target cell, an out-of-service period exists. That is, the hard handover is a seamed handover, and a call drop is likely to occur. Therefore, the hard handover is not a robust handover. Besides, the soft handover is applied only to a handover between intra-frequency cells. When frequencies of the source cell and the target cell are not the same, the existing soft handover cannot keep in contact with the two cells at the same time. In addition, an uplink synchronization technology used in a time division (Time Division, TD) system requires that uplink signals from user equipments in a cell arrive at a base station at the same time, so as to reduce interruption between users as much as possible. Therefore, in the TD system, user equipment needs to adjust an uplink sending time according to different distances between the user equipment and base stations to achieve uplink synchronization. When a distance between the user equipment and the source cell is different from a distance between the user equipment and the target cell, different uplink advances cannot meet uplink requirements of the two cells at the same time, that is, uplink/downlink data communication with the two cells cannot be performed at the same time.

In conclusion, there is a need to resolve an existing problem of a limited and unsmoothed cell handover in different handover application scenarios.

### SUMMARY

Embodiments of the present invention provide user equipment and a cell handover method, to implement a low-delay smooth handover between cells.

According to a first aspect, user equipment is provided, and the user equipment includes:
a sending unit, configured to send measured signal quality information and channel rank feedback information that are of a source cell and of at least one neighboring cell of the source cell to the source cell, where the signal quality information and the channel rank feedback information are used for determining, in the source cell, to send a handover message to the user equipment, the user equipment includes at least one first antenna and at least one second antenna, the at least one first antenna is an antenna by which the user equipment currently connects to the source cell, the at least one second antenna is an idle antenna, and the handover message is used to indicate a target cell to which the user equipment is handed over;
a receiving unit, configured to receive the handover message;
a connection unit, configured to connect to the target cell by using the at least one second antenna; and
a disabling unit, configured to disable the at least one first antenna after the source cell is disconnected from the user equipment.

In a first possible implementation manner, the user equipment further includes:
a selection unit, configured to select, according to a quantity of the at least one second antenna and the channel rank feedback information, an antenna used to connect to the target cell from the at least one second antenna; and
the connection unit is specifically configured to:
   connect to the target cell by using the antenna selected from the at least one second antenna.

With reference to the first aspect, in a second possible implementation manner, the connection unit is specifically configured to:
connect to the target cell by using all the at least one second antenna.

With reference to the first aspect, or the first possible implementation manner of the first aspect, or the second possible implementation manner of the first aspect, in a third possible implementation manner, the user equipment further includes:
an enabling unit, configured to: within a specified time after the handover is complete, enable at least one idle antenna that is not connected to the target cell;
a measuring unit, configured to measure signal quality information of the target cell, and measure the channel rank feedback information based on the antenna connected to the target cell and the at least one enabled idle antenna; and
a determining unit, configured to determine an antenna that needs to be enabled or disabled according to the measured signal instruction information and channel rank feedback information.

With reference to the third possible implementation manner of the first aspect, in a fourth possible implementation manner, the sending unit is further configured to:
report antenna quantity change information to the target cell to which the user equipment is handed over.

According to a second aspect, user equipment is provided, and the user equipment includes a transmitter, a receiver, and a processor; where
the transmitter is configured to send measured signal quality information and channel rank feedback information that are of a source cell and of at least one neighboring cell of the source cell to the source cell, where the signal quality information and the channel rank feedback information are used for determining, in the source cell, to send a handover message to the user equipment, the user equipment includes at least one first antenna and at least one second antenna, the at least one first antenna is an antenna by which the user equipment currently connects to the source cell, the at least one second antenna is an idle antenna, and the handover message is used to indicate a target cell to which the user equipment is handed over;
the receiver is configured to receive the handover message;
the processor is configured to connect to the target cell by using the at least one second antenna; and
the processor is further configured to disable the at least one first antenna after the source cell is disconnected from the user equipment.

In a first possible implementation manner, after the receiver receives the handover message, and before the processor connects to the target cell by using the at least one second antenna, the processor is further configured to:
select, according to a quantity of the at least one second antenna and the channel rank feedback information, an antenna used to connect to the target cell from the at least one second antenna; and
the connecting, by the processor, to the target cell by using the at least one second antenna includes:
   connecting to the target cell by using the antenna selected from the at least one second antenna.

With reference to the second aspect, in a second possible implementation manner, the connecting, by the processor, to the target cell by using the at least one second antenna includes:
connecting to the target cell by using all the at least one second antenna.

With reference to the second aspect, or the first possible implementation manner of the second aspect, or the second possible implementation manner of the second aspect, in a third possible implementation manner, the processor is further configured to:
within a specified time after the handover is complete, enable at least one idle antenna that is not connected to the target cell;
measure signal quality information of the target cell, and measure the channel rank feedback information based on the antenna connected to the target cell and the at least one enabled idle antenna; and
determine an antenna that needs to be enabled or disabled according to the measured signal instruction information and channel rank feedback information.

With reference to the third possible implementation manner of the second aspect, in a fourth possible implementation manner, after the processor determines the antenna that needs to be enabled or disabled according to the measured signal instruction information and channel rank feedback information, the transmitter is further configured to:
report antenna quantity change information to the target cell to which the user equipment is handed over.

According to a third aspect, a cell handover method is provided, and the method includes:
sending measured signal quality information and channel rank feedback information that are of a source cell and of at least one neighboring cell of the source cell to the source cell, where the signal quality information and the channel rank feedback information are used for determining, in the source cell, to send a handover message to the user equipment, the user equipment includes at least one first antenna and at least one second antenna, the at least one first antenna is an antenna by which the user equipment currently connects to the source cell, the at least one second antenna is an idle antenna, and the handover message is used to indicate a target cell to which the user equipment is handed over;
receiving the handover message, and connecting to the target cell by using the at least one second antenna; and
disabling the at least one first antenna after the source cell is disconnected from the user equipment.

In a first possible implementation manner, after the receiving the handover message, and before the connecting to the target cell by using the at least one second antenna, the method further includes:
selecting, according to a quantity of the at least one second antenna and the channel rank feedback information, an antenna used to connect to the target cell from the at least one second antenna; and
the connecting to the target cell by using the at least one second antenna includes:
   connecting to the target cell by using the antenna selected from the at least one second antenna.

With reference to the third aspect, in a second possible implementation manner, the connecting to the target cell by using the at least one second antenna includes:
connecting to the target cell by using all the at least one second antenna.

With reference to the third aspect, or the first possible implementation manner of the third aspect, or the second possible implementation manner of the third aspect, in a third possible implementation manner, the method further includes:
within a specified time after the handover is complete, enabling at least one idle antenna that is not connected to the target cell;
measuring signal quality information of the target cell, and measuring the channel rank feedback information based on the antenna connected to the target cell and the at least one enabled idle antenna; and
determining an antenna that needs to be enabled or disabled according to the measured signal instruction information and channel rank feedback information.

With reference to the third possible implementation manner of the third aspect, in a fourth possible implementation manner, after the determining an antenna that needs to be enabled or disabled according to the measured signal instruction information and channel rank feedback information, the method further includes:
reporting antenna quantity change information to the target cell to which the user equipment is handed over.

It can be learned that, according to the technical solutions of the user equipment and the cell handover method in the embodiments of the present invention, in a cell handover process, the multiple-antenna user equipment uses an antenna to connect to a target cell, and another antenna remains connected to a source cell, so that a low-delay smooth handover between cells can be implemented, and a conventional cell handover technology is no longer limited in different handover application scenarios.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of user equipment according to an embodiment of the present invention;
FIG. 2 is a schematic structural diagram of another user equipment according to an embodiment of the present invention;
FIG. 3 is a schematic structural diagram of still another user equipment according to an embodiment of the present invention;
FIG. 4 is a schematic flowchart of a cell handover method according to an embodiment of the present invention; and
FIG. 5 is a schematic flowchart of another cell handover method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

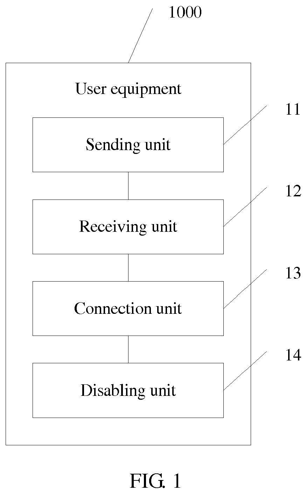

Referring to FIG. 1, FIG. 1 is a schematic structural diagram of user equipment according to an embodiment of the present invention. The user equipment 1000 includes a sending unit 11, a receiving unit 12, a connection unit 13, and a disabling unit 14.

The sending unit 11 is configured to send measured signal quality information and channel rank feedback information that are of a source cell and of at least one neighboring cell of the source cell to the source cell. The signal quality information and the channel rank feedback information are used for determining, in the source cell, to send a handover message to the user equipment. The user equipment includes at least one first antenna and at least one second antenna. The at least one first antenna is an antenna by which the user equipment currently connects to the source cell, and the at least one second antenna is an idle antenna. The handover message is used to indicate a target cell to which the user equipment is handed over.

During a cell handover, a cell that currently serves the user equipment is referred to as a source cell. The user equipment includes multiple antennas. According to an antenna working state, the multiple antennas may be divided into an antenna group A and an antenna group B. The antenna group A and the antenna group B each include several antennas. The user equipment connects to the source cell by using the several antennas in the antenna group A, that is, the antennas in the antenna group A are working antennas. Because the antennas in the antenna group B are in a disabled state and not connected to the source cell, the several antennas in the antenna group B are idle antennas.

The user equipment measures the signal quality information and channel rank feedback information that are of the source cell and of multiple neighboring cells according to pilot signals of the source cell and of the multiple neighboring cells. The sending unit 11 sends a measurement report to the source cell. The measurement report includes the measured signal quality information and channel rank feedback information.

A handover decision is made in the source cell according to the measurement report sent by the user equipment, it is determined whether a handover trigger event for handing over to the neighboring cells is triggered, and the handover message is sent to the user equipment when it is determined that the handover trigger event for handing over to the neighboring cells is triggered. The handover message includes related information of the target cell, such as a frequency of the target cell, a radio resource allocated to the user equipment, and the like.

Long Term Evolution (Long Term Evolution, LTE) is used as an example:

Event A1 (Serving becomes better than threshold): It indicates that signal quality of a serving cell is higher than a threshold. When an event that meets this condition is reported, an eNodeB stops inter-frequency/inter-RAT measurement. This is similar to an event 2F in Universal Mobile Telecommunications System (Universal Mobile Telecommunications System, UMTS).

Event A2 (Serving becomes worse than threshold): It indicates that signal quality of a serving cell is lower than a threshold. When an event that meets this condition is reported, an eNodeB enables inter-frequency/inter-RAT measurement. This is similar to an event 2D in UMTS.

Event A3 (Neighbor becomes offset better than serving): It indicates that quality of a neighboring cell is better than quality of a serving cell. When an event that meets this condition is reported, a source eNodeB enables a handover request. This is similar to an event 1G/2A in UMTS.

Event A4 (Neighbor becomes better than threshold): It indicates that quality of a neighboring cell is higher than a threshold. When an event that meets this condition is reported, a source eNodeB enables a handover request. This is similar to an HCS handover in GSM.

Event A5 (Serving becomes worse than threshold 1 and neighbor becomes better than threshold 2): It indicates that quality of a serving cell is lower than a threshold and quality of a neighboring cell is higher than a threshold. This is similar to an event 2B in UMTS.

Event B1 (Inter RAT neighbor becomes better than threshold): It indicates that quality of an inter-RAT neighboring cell is higher than a threshold. When an event that meets this condition is reported, a source eNodeB enables an inter-RAT handover request. This is similar to an event 3C in UMTS.

Event B2 (Serving becomes worse than threshold 1 and inter RAT neighbor becomes better than threshold 2): It indicates that quality of a serving cell is lower than a threshold and quality of an inter-RAT neighboring cell is higher than a threshold. This is similar to an event 3A in UMTS.

It should be noted that, the source cell and the target cell in this embodiment may be intra-frequency cells, or may be inter-frequency cells.

The receiving unit 12 is configured to receive the handover message.

The connection unit 13 is configured to connect to the target cell by using the at least one second antenna.

After the receiving unit 12 receives the handover message sent from the source cell, because the handover message includes the related information of the target cell, such as the frequency of the target cell, the handover message indicates a neighboring cell to which the user equipment is handed over. The target cell may be a cell of best signal quality in the neighboring cells. Then, the connection unit 13 connects to the target cell by using the several idle antennas in the antenna group B, that is, connects to the target cell by using the several idle antennas in the antenna group B according to the related information of the target cell and the radio resource allocated to the user equipment that are included in the handover message.

The disabling unit 14 is configured to disable the at least one first antenna after the source cell is disconnected from the user equipment.

After a new connection is established between the user equipment and the target cell, the source cell is disconnected from the user equipment, and the disabling unit 14 disables the several antennas in the antenna group A, so that handing over the user equipment from the source cell to the target cell is complete.

For the intra/inter-frequency cells, in a conventional method, all physical antennas simultaneously work on a same frequency, while in this embodiment of the present invention, different antennas may work on different frequencies. For a TDD system, the user equipment needs to adjust a sending time according to different distances between the user equipment and base stations to achieve uplink synchronization. When a distance between the user equipment and the source cell is different from a distance between the user equipment and the target cell, different uplink advances cannot meet uplink requirements of the two cells at the same time, that is, uplink/downlink data communication with the two cells cannot be performed at the same time. In this embodiment of the present invention, separate antenna groups are used to connect to the target cell and the source cell, and different antenna groups may use different uplink advances. Therefore, the cell handover method in this embodiment is not limited in different handover application scenarios, such as intra/inter-frequency cells, and a time/frequency/code division system.

It can be learned that, according to the user equipment in this embodiment of the present invention, in a cell handover process, the multiple-antenna user equipment uses an antenna to connect to a target cell, and another antenna remains connected to a source cell, so that a low-delay smooth handover between cells can be implemented, and a conventional cell handover technology is no longer limited in different handover application scenarios.

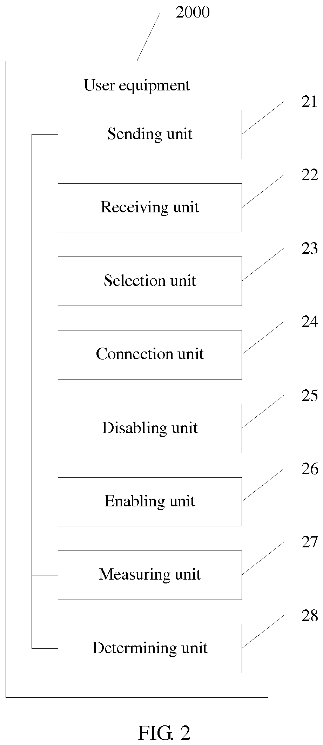

Referring to FIG. 2, FIG. 2 is a schematic structural diagram of another user equipment according to an embodiment of the present invention. The user equipment 2000 includes a sending unit 21, a receiving unit 22, a selection unit 23, a connection unit 24, a disabling unit 25, an enabling unit 26, a measuring unit 27, and a determining unit 28.

The sending unit 21 is configured to send measured signal quality information and channel rank feedback information that are of a source cell and of at least one neighboring cell of the source cell to the source cell. The signal quality information and the channel rank feedback information are used for determining, in the source cell, to send a handover message to the user equipment. The source cell and the at least one neighboring cell are intra-frequency or inter-frequency cells. The user equipment includes at least one first antenna and at least one second antenna. The at least one first antenna is an antenna by which the user equipment currently connects to the source cell, and the at least one second antenna is an idle antenna. The handover message is used to indicate a target cell to which the user equipment is handed over.

A function of the sending unit 21 is the same as that of the sending unit 11 in the embodiment shown in FIG. 1, and details are not described herein again.

The receiving unit 22 is configured to receive the handover message.

The receiving unit 22 receives the handover message sent from the source cell. Because the handover message includes related information of the target cell, such as a frequency of the target cell, the handover message indicates a neighboring cell to which the user equipment is handed over. The target cell may be a cell of best signal quality in the neighboring cells.

The selection unit 23 is configured to select, according to a quantity of the at least one second antenna and the channel rank feedback information, an antenna used to connect to the target cell from the at least one second antenna.

After receiving the handover message sent from the source cell, the user equipment needs to connect to the target cell by using idle antennas in an antenna group B. However, according to a communications capability supported in the target cell, not all the antennas in the antenna group B need to be used to connect to the target cell. The user equipment with an enabled antenna needs to consume power, and enabling an unnecessary antenna wastes power of the user equipment. Therefore, a quantity of antennas connected to the target cell needs to be determined, and a necessary antenna is selected to connect to the target cell.

A channel environment may be slow-changing or fast-changing.

In the slow-changing channel environment, according to a quantity of antennas in the antenna group B and channel rank feedback information between the user equipment and the target cell, an antenna used to connect to the target cell is selected from the antenna group B. A selection rule may be as follows: If a current quantity of idle antennas is greater than Rank, the selection unit 23 selects antennas whose quantity is the same as Rank. Otherwise, the selection unit 23 selects all currently idle antennas. According to a specific scenario, only a necessary idle antenna is selected to connect to the target cell, and this may reduce power consumption of the user equipment.

However, for the fast-changing environment, a measurement result of the user equipment cannot correctly reflect an instantaneous change of the channel environment. Therefore, in this scenario, the selection unit 23 does not select, according to a space transmission capability, that is, the quantity of antennas in the antenna group B and the channel rank feedback information, the antenna used to connect to the target cell, and the user equipment directly connects to the target cell by using all the antennas in the antenna group B.

The connection unit 24 is configured to connect to the target cell by using the antenna selected from the at least one second antenna.

The user equipment connects to the target cell by using the antenna selected from the antenna group B. That is, according to related information of the target cell and a radio resource allocated to the user equipment that are included in the handover message, the user equipment connects to the target cell by using several idle antennas selected from the antenna group B. The selected antenna may be all idle antennas or some idle antennas in the antenna group B.

The disabling unit 25 is configured to disable the at least one first antenna after the source cell is disconnected from the user equipment.

A function of the disabling unit 25 is the same as that of the disabling unit 14 in the embodiment shown in FIG. 1, and details are not described herein again.

The enabling unit 26 is configured to: within a specified time after the handover is complete, enable at least one idle antenna that is not connected to the target cell.

Within a period of time in which the user equipment is handed over, the enabling unit 26 periodically enables, at regular intervals, an idle antenna used for measurement. The idle antenna refers to an antenna that is originally connected to the source cell and that is not selected to connect to the target cell.

The measuring unit 27 is configured to measure signal quality information of the target cell, and measure the channel rank feedback information based on the antenna connected to the target cell and the at least one enabled idle antenna.

After the user equipment is handed over from the source cell to the target cell, the measuring unit 27 measures the current signal quality of the target cell, and measures the channel rank feedback information of the target cell based on the antenna connected to the target cell and all enabled idle antennas.

The determining unit 28 is configured to determine an antenna that needs to be enabled or disabled according to the measured signal instruction information and channel rank feedback information.

The antenna that needs to be enabled or disabled is determined according to the measured signal instruction information and channel rank feedback information and in a same manner as the foregoing antenna determining manner.

By periodically enabling an idle antenna used for measurement, after the handover is complete, a quantity of antennas working for the user equipment may be dynamically adjusted according to the signal quality information and the channel rank feedback information of the target cell, and an unused antenna is disabled, so that power consumption of the user equipment can be reduced.

The sending unit 21 is further configured to report antenna quantity change information to the target cell to which the user equipment is handed over.

When a quantity of antennas communicating with the target cell changes, that is, a new idle antenna is enabled and/or a working antenna is disabled, the sending unit 21 needs to report the antenna quantity change information to a base station of the target cell by using signaling.

It can be learned that, according to the user equipment in this embodiment of the present invention, in a cell handover process, the multiple-antenna user equipment uses an antenna to connect to a target cell, and another antenna remains connected to a source cell, so that a low-delay smooth handover between cells can be implemented, and a conventional cell handover technology is no longer limited in different handover application scenarios. In addition, in the handover process and after the handover is complete, according to signal quality information and channel rank feedback information of the target cell, a quantity of antennas working for the user equipment is dynamically adjusted, and an unused antenna is disabled, so that power consumption of the user equipment can be reduced.

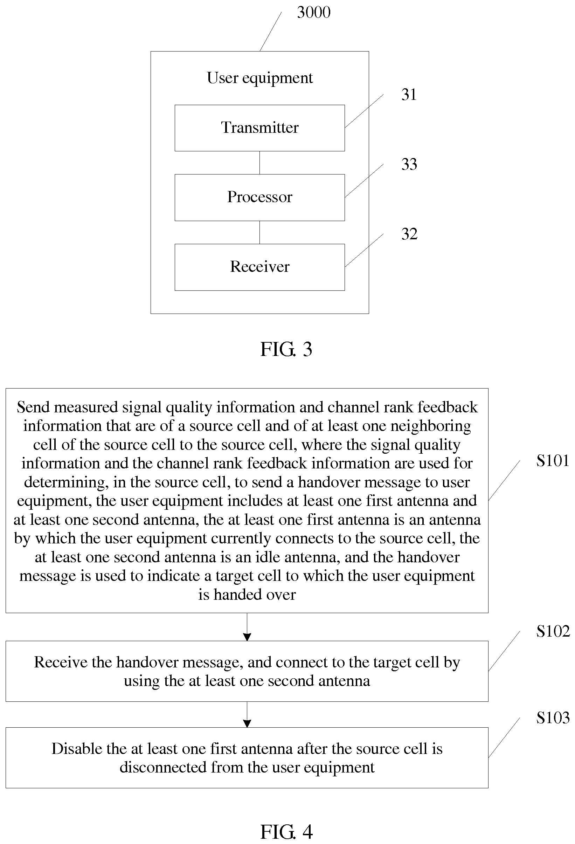

Referring to FIG. 3, FIG. 3 is a schematic structural diagram of still another user equipment according to an embodiment of the present invention. The user equipment 3000 includes a transmitter 31, a receiver 32, and a processor 33. The transmitter 31 and the receiver 32 are connected to the processor 33.

The transmitter 31 is configured to send measured signal quality information and channel rank feedback information that are of a source cell and of at least one neighboring cell of the source cell to the source cell. The signal quality information and the channel rank feedback information are used for determining, in the source cell, to send a handover message to the user equipment. The user equipment includes at least one first antenna and at least one second antenna. The at least one first antenna is an antenna by which the user equipment currently connects to the source cell, and the at least one second antenna is an idle antenna. The handover message is used to indicate a target cell to which the user equipment is handed over.

The receiver 32 is configured to receive the handover message.

The processor 33 is configured to connect to the target cell by using the at least one second antenna.

The processor 33 is further configured to disable the at least one first antenna after the source cell is disconnected from the user equipment.

In an implementation manner, after the receiver 32 receives the handover message, before the processor 33 connects to the target cell by using the at least one second antenna, the processor 33 is further configured to:
select, according to a quantity of the at least one second antenna and the channel rank feedback information, an antenna used to connect to the target cell from the at least one second antenna.

The connecting, by the processor 33, to the target cell by using the at least one second antenna includes:
connecting to the target cell by using the antenna selected from the at least one second antenna.

In another implementation manner, the connecting, by the processor 33, to the target cell by using the at least one second antenna includes:
connecting to the target cell by using all the at least one second antenna.

In still another implementation manner, the processor 33 is further configured to:
within a specified time after the handover is complete, enable at least one idle antenna that is not connected to the target cell;
measure signal quality information of the target cell, and measure the channel rank feedback information based on the antenna connected to the target cell and the at least one enabled idle antenna; and
determine an antenna that needs to be enabled or disabled according to the measured signal instruction information and channel rank feedback information.

In still another implementation manner, after the processor 33 determines the antenna that needs to be enabled or disabled according to the measured signal instruction information and channel rank feedback information, the transmitter 31 is further configured to:
report antenna quantity change information to the target cell to which the user equipment is handed over.

It can be learned that, according to the user equipment in this embodiment of the present invention, in a cell handover process, the multiple-antenna user equipment uses an antenna to connect to a target cell, and another antenna remains connected to a source cell, so that a low-delay smooth handover between cells can be implemented, and a conventional cell handover technology is no longer limited in different handover application scenarios. In addition, in the handover process and after the handover is complete, according to signal quality information and channel rank feedback information of the target cell, a quantity of antennas working for the user equipment is dynamically adjusted, and an unused antenna is disabled, so that power consumption of the user equipment can be reduced.

Referring to FIG. 4, FIG. 4 is a schematic flowchart of a cell handover method according to an embodiment of the present invention. The method includes the following steps.

Step S101: Send measured signal quality information and channel rank feedback information that are of a source cell and of at least one neighboring cell of the source cell to the source cell, where the signal quality information and the channel rank feedback information are used for determining, in the source cell, to send a handover message to the user equipment, the user equipment includes at least one first antenna and at least one second antenna, the at least one first antenna is an antenna by which the user equipment currently connects to the source cell, the at least one second antenna is an idle antenna, and the handover message is used to indicate a target cell to which the user equipment is handed over.

During a cell handover, a cell that currently serves the user equipment is referred to as a source cell. The user equipment includes multiple antennas. According to an antenna working state, the multiple antennas may be divided into an antenna group A and an antenna group B. The antenna group A and the antenna group B each include several antennas. The user equipment connects to the source cell by using the several antennas in the antenna group A, that is, the antennas in the antenna group A are working antennas. Because the antennas in the antenna group B are in a disabled state and not connected to the source cell, the several antennas in the antenna group B are idle antennas.

The user equipment measures signal quality information and channel rank feedback information that are of the source cell and of multiple neighboring cells according to pilot signals of the source cell and of the multiple neighboring cells, and sends a measurement report to the source cell. The measurement report includes the measured signal quality information and channel rank feedback information.

A handover decision is made in the source cell according to the measurement report sent by the user equipment, it is determined whether a handover trigger event for handing over to the neighboring cells is triggered, and the handover message is sent to the user equipment when it is determined that the handover trigger event for handing over to the neighboring cells is triggered. The handover message includes related information of the target cell, such as a frequency of the target cell, a radio resource allocated to the user equipment, and the like.

LTE is used as an example:

Event A1 (Serving becomes better than threshold): It indicates that signal quality of a serving cell is higher than a threshold. When an event that meets this condition is reported, an eNodeB stops inter-frequency/inter-RAT measurement. This is similar to an event 2F in UMTS.

Event A2 (Serving becomes worse than threshold): It indicates that signal quality of a serving cell is lower than a threshold. When an event that meets this condition is reported, an eNodeB enables inter-frequency/inter-RAT measurement. This is similar to an event 2D in UMTS.

Event A3 (Neighbor becomes offset better than serving): It indicates that quality of a neighboring cell is better than quality of a serving cell. When an event that meets this condition is reported, a source eNodeB enables a handover request. This is similar to an event 1G/2A in UMTS.

Event A4 (Neighbor becomes better than threshold): It indicates that quality of a neighboring cell is higher than a threshold. When an event that meets this condition is reported, a source eNodeB enables a handover request. This is similar to an HCS handover in GSM.

Event A5 (Serving becomes worse than threshold 1 and neighbor becomes better than threshold 2): It indicates that quality of a serving cell is lower than a threshold and quality of a neighboring cell is higher than a threshold. This is similar to an event 2B in UMTS.

Event B1 (Inter RAT neighbor becomes better than threshold): It indicates that quality of an inter-RAT neighboring cell is higher than a threshold. When an event that meets this condition is reported, a source eNodeB enables an inter-RAT handover request. This is similar to an event 3C in UMTS.

Event B2 (Serving becomes worse than threshold 1 and inter RAT neighbor becomes better than threshold 2): It indicates that quality of a serving cell is lower than a threshold and quality of an inter-RAT neighboring cell is higher than a threshold. This is similar to an event 3A in UMTS.

It should be noted that, the source cell and the target cell in this embodiment may be intra-frequency cells, or may be inter-frequency cells.

Step S102: Receive the handover message, and connect to the target cell by using the at least one second antenna.

After the user equipment receives the handover message sent from the source cell, because the handover message includes the related information of the target cell, such as the frequency of the target cell, the handover message indicates a neighboring cell to which the user equipment is handed over. The target cell may be a cell of best signal quality in the neighboring cells. Then, the user equipment connects to the target cell by using the several idle antennas in the antenna group B, that is, connects to the target cell by using the several idle antennas in the antenna group B according to the related information of the target cell and the radio resource allocated to the user equipment that are included in the handover message.

Step S103: Disable the at least one first antenna after the source cell is disconnected from the user equipment.

After a new connection is established between the user equipment and the target cell, the source cell is disconnected from the user equipment, and the user equipment disables the several antennas in the antenna group A, so that handing over the user equipment from the source cell to the target cell is complete.

For the intra/inter-frequency cells, in a conventional method, all physical antennas simultaneously work on a same frequency, while in this embodiment of the present invention, different antennas may work on different frequencies. For a TDD system, the user equipment needs to adjust an uplink sending time according to different distances between the user equipment and base stations to achieve uplink synchronization. When a distance between the user equipment and the source cell is different from a distance between the user equipment and the target cell, different uplink advances cannot meet uplink requirements of the two cells at the same time, that is, uplink/downlink data communication with the two cells cannot be performed at the same time. In this embodiment of the present invention, separate antenna groups are used to connect to the target cell and the source cell, and different antenna groups may use different uplink advances. Therefore, the cell handover method in this embodiment is not limited in different handover application scenarios, such as intra/inter-frequency cells, and a time/frequency/code division system.

It can be learned that, according to the cell handover method in this embodiment of the present invention, in a cell handover process, multiple-antenna user equipment uses an antenna to connect to a target cell, and another antenna remains connected to a source cell, so that a low-delay smooth handover between cells can be implemented, and a conventional cell handover technology is no longer limited in different handover application scenarios.

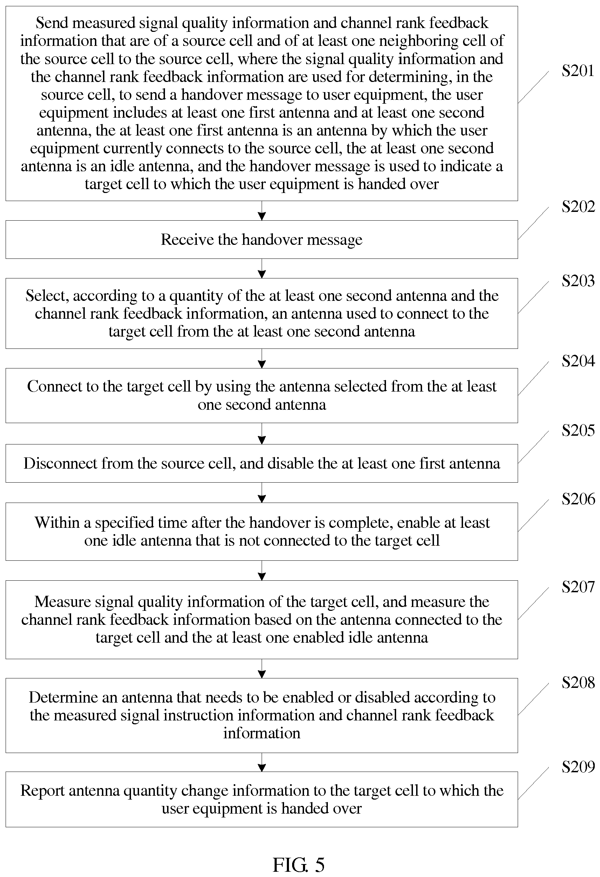

Referring to FIG. 5, FIG. 5 is a schematic flowchart of another cell handover method according to an embodiment of the present invention. The method includes the following steps.

Step S201: Send measured signal quality information and channel rank feedback information that are of a source cell and of at least one neighboring cell of the source cell to the source cell, where the signal quality information and the channel rank feedback information are used for determining, in the source cell, to send a handover message to the user equipment, the user equipment includes at least one first antenna and at least one second antenna, the at least one first antenna is an antenna by which the user equipment currently connects to the source cell, the at least one second antenna is an idle antenna, and the handover message is used to indicate a target cell to which the user equipment is handed over.

This step is the same as step S101 in the embodiment shown in FIG. 4, and details are not described herein again.

Step S202: Receive the handover message.

The user equipment receives the handover message sent from the source cell. Because the handover message includes related information of the target cell, such as a frequency of the target cell, the handover message indicates a neighboring cell to which the user equipment is handed over. The target cell may be a cell of best signal quality in neighboring cells.

Step S203: Select, according to a quantity of the at least one second antenna and the channel rank feedback information, an antenna used to connect to the target cell from the at least one second antenna.

After receiving the handover message sent from the source cell, the user equipment needs to connect to the target cell by using idle antennas in an antenna group B. However, according to a communications capability supported in the target cell, not all the antennas in the antenna group B need to be used to connect to the target cell. The user equipment with an enabled antenna needs to consume power, and enabling an unnecessary antenna wastes power of the user equipment. Therefore, a quantity of antennas connected to the target cell needs to be determined, and a necessary antenna is selected to connect to the target cell.

A channel environment may be slow-changing or fast-changing.

In the slow-changing channel environment, according to a quantity of antennas in the antenna group B and channel rank feedback information between the user equipment and the target cell, an antenna used to connect to the target cell is selected from the antenna group B. A selection rule may be as follows: If a current quantity of idle antennas is greater than Rank, antennas whose quantity are the same as Rank are selected. Otherwise, all currently idle antennas are selected. According to a specific scenario, only a necessary idle antenna is selected to connect to the target cell, and this may reduce power consumption of the user equipment.

However, for the fast-changing environment, a measurement result of the user equipment cannot correctly reflect an instantaneous change of the channel environment. Therefore, in this scenario, the user equipment does not select, according to a space transmission capability, that is, the quantity of antennas in the antenna group B and the channel rank feedback information, the antenna used to connect to the target cell, but directly connects to the target cell by using all the antennas in the antenna group B.

Step S204: Connect to the target cell by using the antenna selected from the at least one second antenna.

The user equipment connects to the target cell by using the antenna selected from the antenna group B. That is, according to related information of the target cell and a radio resource allocated to the user equipment that are included in the handover message, the user equipment connects to the target cell by using several idle antennas selected from the antenna group B. The selected antenna may be all idle antennas or some idle antennas in the antenna group B.

Step S205: Disconnect from the source cell, and disable the at least one first antenna.

This step is the same as step S103 in the embodiment shown in FIG. 4, and details are not described herein again.

Step S206: Within a specified time after the handover is complete, enable at least one idle antenna that is not connected to the target cell.

Within a period of time in which the user equipment is handed over, the user equipment periodically enables, at regular intervals, an idle antenna used for measurement. The idle antenna refers to an antenna that is originally connected to the source cell and that is not selected to connect to the target cell.

Step S207: Measure signal quality information of the target cell, and measure the channel rank feedback information based on the antenna connected to the target cell and the at least one enabled idle antenna.

After the user equipment is handed over from the source cell to the target cell, the user equipment measures the current signal quality of the target cell, and measures the channel rank feedback information of the target cell based on the antenna connected to the target cell and all enabled idle antennas.

Step S208: Determine an antenna that needs to be enabled or disabled according to the measured signal instruction information and channel rank feedback information.

The antenna that needs to be enabled or disabled is determined according to the measured signal instruction information and channel rank feedback information obtained in step S207 and in a same manner as the antenna determining manner in step S203.

By periodically enabling an idle antenna used for measurement according to steps S206 to S208, after the handover is complete, a quantity of antennas working for the user equipment may be dynamically adjusted according to the signal quality information and the channel rank feedback information of the target cell, and an unused antenna is disabled, so that power consumption of the user equipment can be reduced.

Step S209: Report antenna quantity change information to the target cell to which the user equipment is handed over.

When a quantity of antennas communicating with the target cell changes, that is, a new idle antenna is enabled and/or a working antenna is disabled, the antenna quantity change information needs to be reported to a base station of the target cell by using signaling.

It can be learned that, according to the cell handover method in this embodiment of the present invention, in a cell handover process, multiple-antenna user equipment uses an antenna to connect to a target cell, and another antenna remains connected to a source cell, so that a low-delay smooth handover between cells can be implemented, and a conventional cell handover technology is no longer limited in different handover application scenarios. In addition, in the handover process and after the handover is complete, according to signal quality information and channel rank feedback information of the target cell, a quantity of antennas working for the user equipment is dynamically adjusted, and an unused antenna is disabled, so that power consumption of the user equipment can be reduced.

It should be noted that, for brief description, the foregoing method embodiments are represented as a series of actions. However, a person skilled in the art should appreciate that the present invention is not limited to the described order of the actions, because according to the present invention, some steps may be performed in other orders or simultaneously. In addition, a person skilled in the art should also appreciate that all the embodiments described in the specification are examples of the embodiments, and the related actions and modules are not necessarily mandatory to the present invention.

In the foregoing embodiments, the description of each embodiment has respective focuses. For a part that is not described in detail in an embodiment, refer to related descriptions in other embodiments.

A sequence of the steps of the method in the embodiments of the present invention may be adjusted, and certain steps may also be merged or removed according to an actual need.

Merging, division, and removing may be performed on the units in the embodiments of the present invention according to an actual need. A person skilled in the art may make reference to or a combination of different embodiments and functions of the different embodiments described in this specification.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is taken as an example but is not limited: The computer readable medium may include a random access memory (Random Access Memory, RAM), a read-only memory (Read-Only Memory, ROM), an electrically erasable programmable read-only memory (Electrically Erasable Programmable Read-Only Memory, EEPROM), a compact disc read-only memory (Compact Disc Read-Only Memory, CD-ROM) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (Digital Subscriber Line, DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely an example of the embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. User equipment, wherein the user equipment comprises:
a sending unit, configured to send measured signal quality information and channel rank feedback information that are of a source cell and of at least one neighboring cell of the source cell to the source cell, wherein the signal quality information and the channel rank feedback information are used for determining, in the source cell, to send a handover message to the user equipment, the user equipment comprises at least one first antenna and at least one second antenna, the at least one first antenna is an antenna by which the user equipment currently connects to the source cell, the at least one second antenna is an idle antenna, and the handover message is used to indicate a target cell to which the user equipment is handed over;
a receiving unit, configured to receive the handover message;
a connection unit, configured to connect to the target cell by using the at least one second antenna; and
a disabling unit, configured to disable the at least one first antenna after the source cell is disconnected from the user equipment.

2. The user equipment according to claim 1, wherein the user equipment further comprises:
a selection unit, configured to select, according to a quantity of the at least one second antenna and the channel rank feedback information, an antenna used to connect to the target cell from the at least one second antenna; and
the connection unit is specifically configured to:
connect to the target cell by using the antenna selected from the at least one second antenna.

3. The user equipment according to claim 1, wherein the connection unit is specifically configured to:
connect to the target cell by using all the at least one second antenna.

4. The user equipment according to any one of claims 1 to 3, wherein the user equipment further comprises:
an enabling unit, configured to: within a specified time after the handover is complete, enable at least one idle antenna that is not connected to the target cell;
a measuring unit, configured to measure signal quality information of the target cell, and measure the channel rank feedback information based on the antenna connected to the target cell and the at least one enabled idle antenna; and
a determining unit, configured to determine an antenna that needs to be enabled or disabled according to the measured signal instruction information and channel rank feedback information.

5. The user equipment according to claim 4, wherein the sending unit is further configured to:
report antenna quantity change information to the target cell to which the user equipment is handed over.

6. User equipment, wherein the user equipment comprises a transmitter, a receiver, and a processor;
the transmitter is configured to send measured signal quality information and channel rank feedback information that are of a source cell and of at least one neighboring cell of the source cell to the source cell, wherein the signal quality information and the channel rank feedback information are used for determining, in the source cell, to send a handover message to the user equipment, the user equipment comprises at least one first antenna and at least one second antenna, the at least one first antenna is an antenna by which the user equipment currently connects to the source cell, the at least one second antenna is an idle antenna, and the handover message is used to indicate a target cell to which the user equipment is handed over;
the receiver is configured to receive the handover message;
the processor is configured to connect to the target cell by using the at least one second antenna; and
the processor is further configured to disable the at least one first antenna after the source cell is disconnected from the user equipment.

7. The user equipment according to claim 6, wherein after the receiver receives the handover message, and before the processor connects to the target cell by using the at least one second antenna, the processor is further configured to:
select, according to a quantity of the at least one second antenna and the channel rank feedback information, an antenna used to connect to the target cell from the at least one second antenna; and
the connecting, by the processor, to the target cell by using the at least one second antenna comprises:
connecting to the target cell by using the antenna selected from the at least one second antenna.

8. The user equipment according to claim 6, the connecting, by the processor, to the target cell by using the at least one second antenna comprises:
connecting to the target cell by using all the at least one second antenna.

9. The user equipment according to any one of claims 6 to 8, wherein the processor is further configured to:
within a specified time after the handover is complete, enable at least one idle antenna that is not connected to the target cell;
measure signal quality information of the target cell, and measure the channel rank feedback information based on the antenna connected to the target cell and the at least one enabled idle antenna; and
determine an antenna that needs to be enabled or disabled according to the measured signal instruction information and channel rank feedback information.

10. The user equipment according to claim 9, wherein after the processor determines the antenna that needs to be enabled or disabled according to the measured signal instruction information and channel rank feedback information, the transmitter is further configured to:
report antenna quantity change information to the target cell to which the user equipment is handed over.

11. A cell handover method, wherein the method comprises:
sending measured signal quality information and channel rank feedback information that are of a source cell and of at least one neighboring cell of the source cell to the source cell, wherein the signal quality information and the channel rank feedback information are used for determining, in the source cell, to send a handover message to the user equipment, the user equipment comprises at least one first antenna and at least one second antenna, the at least one first antenna is an antenna by which the user equipment currently connects to the source cell, the at least one second antenna is an idle antenna, and the handover message is used to indicate a target cell to which the user equipment is handed over;
receiving the handover message, and connecting to the target cell by using the at least one second antenna; and
disabling the at least one first antenna after the source cell is disconnected from the user equipment.

12. The method according to claim 11, wherein after the receiving the handover message, and before the connecting to the target cell by using the at least one second antenna, the method further comprises:
selecting, according to a quantity of the at least one second antenna and the channel rank feedback information, an antenna used to connect to the target cell from the at least one second antenna; and
the connecting to the target cell by using the at least one second antenna comprises:
connecting to the target cell by using the antenna selected from the at least one second antenna.

13. The method according to claim 11, the connecting to the target cell by using the at least one second antenna comprises:
connecting to the target cell by using all the at least one second antenna.

14. The method according to any one of claims 11 to 13, wherein the method further comprises:
within a specified time after the handover is complete, enabling at least one idle antenna that is not connected to the target cell;
measuring signal quality information of the target cell, and measuring the channel rank feedback information based on the antenna connected to the target cell and the at least one enabled idle antenna; and
determining an antenna that needs to be enabled or disabled according to the measured signal instruction information and channel rank feedback information.

15. The method according to claim 14, wherein after the determining an antenna that needs to be enabled or disabled according to the measured signal instruction information and channel rank feedback information, the method further comprises:
reporting antenna quantity change information to the target cell to which the user equipment is handed over.
